(19)

Europäisches
Patentamt
European
Patent Office
Office européen
des brevets

(11) **EP 3 407 328 A1**

(12) **EUROPEAN PATENT APPLICATION**
published in accordance with Art. 153(4) EPC

(43) Date of publication:
**28.11.2018 Bulletin 2018/48**

(51) Int Cl.:
***G08G 1/16*** *(2006.01)*     ***G01C 21/26*** *(2006.01)*

(21) Application number: **16886488.2**

(22) Date of filing: **08.12.2016**

(86) International application number:
**PCT/JP2016/086624**

(87) International publication number:
**WO 2017/126249 (27.07.2017 Gazette 2017/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.01.2016 JP 2016010540**

(71) Applicant: **Nissan Motor Co., Ltd.**
**Yokohama-shi, Kanagawa 221-0023 (JP)**

(72) Inventors:
• **MISHINA, Yohei**
**Atsugi-shi**
**Kanagawa 243-0123 (JP)**

• **FUJITA, Susumu**
**Atsugi-shi**
**Kanagawa**
**2430123 (JP)**
• **AOKI, Motonobu**
**Atsugi-shi**
**Kanagawa 243-0123 (JP)**

(74) Representative: **Grünecker Patent- und**
**Rechtsanwälte**
**PartG mbB**
**Leopoldstraße 4**
**80802 München (DE)**

(54) **DRIVING ASSISTANCE METHOD AND DEVICE**

(57) The present disclosure includes extracting interference traffic line that is a route along which another vehicle can move and that interfere with a planned travel route of a subject vehicle, selecting an interference traffic line of another vehicle necessary for determining a driving action of the subject vehicle from among the extracted interference traffic lines on the basis of at least one of a road shape, a traffic rule, and a traffic situation, and determining the driving action of the subject vehicle to respond to another vehicle moving along the selected interference traffic line.

Fig.15

**EP 3 407 328 A1**

## Description

[Technical Field]

The present invention relates to a driving assistance method and a driving assistance apparatus that assist the driving of a vehicle.

[Background Art]

A driving assistance device or apparatus is known which is incapable of direct perception by a sensor, but when the existence of a potential moving object such as a motorbike existing at a blind spot of another moving object such as a car is expected, estimates a possible route to calculate a risk of contact and determines the driving action on the basis of the calculated risk of contact (Patent Document 1: JP2011-96105A).

[Prior Art Document]

[Patent Document]

[Patent Document 1] JP2011-96105A

[Summary of Invention]

[Problems to be solved by Invention]

However, when the perception by a sensor is not possible and the estimation of a possible route is also not possible, the risk of contact cannot be calculated and the driving action cannot be determined. If a searching range when determining the driving action is wide, therefore, the searching range is likely to involve a range in which the perception by a sensor is not possible, and a problem arises in that the determination of a driving action may be difficult.
A problem to be solved by the present invention is to provide a driving assistance method and a driving assistance apparatus that are able to suppress the occurrence of a situation in which the determination of a driving action is difficult.

[Means for solving problems]

The present invention solves the above problem through extracting interference traffic line that is a route along which another vehicle can move and that interfere with a planned travel route of a subject vehicle, selecting an interference traffic line of another vehicle necessary for determining a driving action of the subject vehicle from among the extracted interference traffic lines on the basis of at least one of a road shape, a traffic rule, and a traffic situation, and determining the driving action of the subject vehicle to respond to another vehicle moving along the selected interference traffic line.

[Effect of Invention]

According to the present invention, the range for search when determining the driving action of the subject vehicle can be set as an appropriate range in accordance with the necessity for determining the driving action of the subject vehicle. It is therefore possible to suppress the occurrence of a range in which perception is not possible in the range for search when determining the driving action and also to suppress the occurrence of a situation in which the determination of a driving action is difficult.

[Brief Description of Drawings]

FIG. 1 is a block diagram illustrating a driving assistance system according to one or more embodiments of the present invention.
FIG. 2 is a diagram for describing a method of extracting traffic lines of other vehicles at an intersection.
FIG. 3 is a diagram for describing a process of selecting a necessary traffic line in accordance with the state of traffic signals at an intersection.
FIG. 4 is a diagram for describing the process of selecting a necessary traffic line in accordance with the state of traffic signals at the intersection.

FIG. 5 is a graph illustrating the relationship between an elapsed time [s] from the change of the state of a traffic signal corresponding to an interference traffic line and the probability [%] that another vehicle enters the intersection.

FIG. 6 is a graph illustrating the relationship between a decrease amount [m/s] per unit time of the length of a necessary traffic line and the vehicle speed [m/s] of another vehicle entering the intersection along the interference traffic line.

FIG. 7 is a diagram for describing a process of selecting the necessary traffic line at an intersection in accordance with the planned travel route of a parallel traveling vehicle and the traffic rules.

FIG. 8 is a diagram for describing the process of selecting the necessary traffic line at the intersection in accordance with the planned travel route of the parallel traveling vehicle and the traffic rules.

FIG. 9 is a diagram for describing the process of selecting the necessary traffic line at the intersection in accordance with the planned travel route of the parallel traveling vehicle and the traffic rules.

FIG. 10 is a diagram for describing a process of selecting the necessary traffic line in accordance with the traffic rules on a road.

FIG. 11 is a diagram for describing a process of selecting the necessary traffic line in accordance with the traffic rules on a road.

FIG. 12 is a diagram for describing a process of selecting the necessary traffic line in accordance with the traffic rules on a road.

FIG. 13 is a diagram for describing a scheme of determining a driving action to respond to the interference traffic line of another vehicle which travels in an intersection from the right side to the planned travel route of the subject vehicle.

FIG. 14 is a diagram for describing a scheme of determining a driving action to respond to the interference traffic line of another vehicle which turns right from an oncoming lane and travels in an intersection to the planned travel route of the subject vehicle.

FIG. 15 is a flowchart for describing a process of selecting a necessary traffic line in accordance with the state of traffic signals using an evaluation processor of a scene evaluation device.

FIG. 16 is a flowchart for describing a process of selecting a necessary traffic line in accordance with the planned travel route of a parallel traveling vehicle and the traffic rules using the evaluation processor of the evaluation processor.

FIG. 17 is a flowchart for describing a process of selecting a necessary traffic line in accordance with the traffic rules on a road using the evaluation processor of the scene evaluation device.

[Mode(s) for Carrying out the Invention]

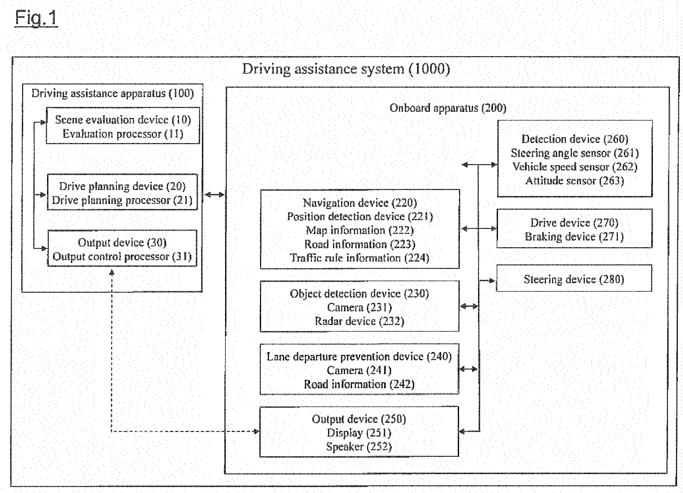

Hereinafter, one or more embodiments of the present invention will be described with reference to the drawings. FIG. 1 is a diagram illustrating the block configuration of a driving assistance system 1000 according to one or more embodiments of the present invention. As illustrated in the figure, the driving assistance system 1000 comprises a driving assistance apparatus 100 and an onboard apparatus 200. The driving assistance apparatus 100 may be equipped in a vehicle or may also be applied to portable terminal devices that can exchange information with the onboard apparatus 200. Examples of such terminal devices include equipment, such as a smartphone and a PDA. The driving assistance system 1000, the driving assistance apparatus 100, the onboard apparatus 200, and various devices thereof may be provided with an arithmetic processing unit, such as one or more CPUs.

The onboard apparatus 200 comprises a vehicle controller 210, a navigation device 220, an object detection device 230, a lane departure prevention device 240, and an output device 250. These devices which constitute the onboard apparatus 200 are connected to one another via a controller area network (CAN) or other onboard LAN to mutually exchange information. The onboard apparatus 200 can exchange information with the driving assistance apparatus 100 via such an onboard LAN. The vehicle controller 210 operates in cooperation with a detection device 260, a drive device 270, and a steering device 280.

The detection device 260 comprises a steering angle sensor 261, a vehicle speed sensor 262, and an attitude sensor 263. The steering angle sensor 261 detects a steering amount, a steering speed, steering acceleration, and the like and outputs the detection signals to the vehicle controller 210. The vehicle speed sensor 262 detects a speed and/or acceleration of the vehicle and outputs the detection signals to the vehicle controller 210. The attitude sensor 263 detects a position of the vehicle, a pitch angle of the vehicle, a yaw angle of the vehicle, and a roll angle of the vehicle and outputs the detection signals to the vehicle controller 210. The attitude sensor 263 includes a gyrosensor.

The vehicle controller 210, which is an onboard computer such as an engine control unit (ECU), controls the travel driving, braking, and steering of the vehicle. The vehicle according to one or more embodiments of the present invention may be, for example, an electric car having an electric motor as the travel driving source, an engine car having an internal-combustion engine as the travel driving source, a hybrid car having both an electric motor and an internal-combustion engine as the travel driving sources, or the like. Examples of the electric car or hybrid car having an electric motor as the travel driving source include a type in which the power source for the electric motor is a secondary battery and a type in which the power source for the electric motor is a fuel cell.

The drive device 270 comprises an electric motor and/or an internal-combustion engine as the above-described travel driving sources, a power transmission device including a drive shaft and an automatic transmission that transmit the output of the travel driving source or sources to the driving wheels, a braking device 271 that brakes wheels, and other necessary components. The drive device 270 executes the travel control including acceleration and deceleration of the vehicle on the basis of control signals acquired from the vehicle controller 210 or input signals by an accelerator operation and a brake operation. In the case of a hybrid car, a ratio of the torque output to the electric motor and the torque output to the internal-combustion engine in accordance with the traveling state of the vehicle is also output from the vehicle controller 210 to the drive device 270.

The steering device 280 includes a steering actuator. The steering actuator includes a motor and other necessary components attached to the steering column shaft. The steering device 280 executes control of varying the traveling direction of the vehicle on the basis of control signals acquired from the vehicle controller 210 or input signals by a steering operation.

The vehicle controller 210 outputs control signals to the drive device 270 and the steering device 280 on the basis of a driving action plan which is output from a drive planning device 20 of the driving assistance apparatus 100. Here, control of the drive device 270 and/or control of the steering device 280 may be performed in a completely automated manner or in a form of assisting with the driving operation (traveling operation) of the driver. In this case, control of the drive device 270 and control of the steering device 280 are suspended/canceled by an intervention operation of the driver, such as steering and braking.

The navigation device 220 calculates a route from the current position of the subject vehicle to a destination. The scheme of calculating the route may be a known scheme at the time of filing of the present application based on a graph search algorithm, such as Dijkstra's algorithm or A* search algorithm. The calculated route is output to the driving assistance apparatus 100 to be used for the driving assistance for the subject vehicle. The calculated route is also presented as route guidance information by the output device 250.

The navigation device 220 includes a position detection device 221. The position detection device 221 is responsible to the Global Positioning System (GPS) and detects a traveling position (latitude/longitude) of the vehicle traveling.

The navigation device 220 includes a database that stores accessible map information 222, road information 223, and traffic rule information 224. It suffices that the database storing the map information 222, road information 223, and traffic rule information 224 can be read by the navigation device 220, and the database may be configured to be physically separated from the navigation device 220 or may also be stored in a server from which the stored information is readable via a communication network.

The map information 222 is a so-called electronic map that represents information in which the latitude and longitude are associated with the map information. The map information 222 includes the road information 223 which is associated with each point.

The road information 223 is defined by nodes and links connecting between nodes. The road information 223 includes information for specifying a road by a position/region of the road, information on the road type and road width of each road, and other information regarding roads. The road information 223 also includes information regarding an intersection which is associated with identification information of each road link. The information regarding an intersection includes information on the position of an intersection, the entering direction into the intersection, the type of the intersection, and traffic lines in the intersection. The road information 223 further includes information on the configuration of a road, whether or not the straight-ahead traveling is permitted, the priority relationship in traveling, whether or not the overtaking is permitted (whether or not the lane change to an adjacent lane is permitted), presence or absence of a traffic signal, etc. as the information regarding a road which is associated with the identification information of each road link.

The traffic rule information 224 is information regarding traffic rules on a route, such as STOP, NO PARKING/NO STOPPING, SLOW, and SPEED LIMIT, which the vehicle must follow when traveling. Each traffic rule is defined for each point (latitude, longitude) and each link. The traffic rule information 224 may include information on traffic signals which is acquired from an apparatus provided on the road side.

The object detection device 230 detects the existence and existing positions of objects including obstacles that may exist around the subject vehicle. Although not particularly limited, the object detection device 230 includes a camera 231. Examples of the camera 231 include an imaging device comprising an imaging element such as a CCD, an infrared camera, and a stereo camera. The camera 231 is disposed at a certain position of the subject vehicle and captures images of objects around the subject vehicle. The term "around the subject vehicle" as used herein encompasses the concepts of "ahead of the subject vehicle," "behind the subject vehicle," "sideways ahead of the subject vehicle," and "sideways behind the subject vehicle." Examples of objects imaged by the camera 231 include stationary objects such as traffic signals and traffic signs, moving objects such as pedestrians and other vehicles such as two-wheel vehicles and four-wheel vehicles, and road structures such as guardrails, median strips, and curbstones.

The object detection device 230 may analyze the image data and identify the type of an object on the basis of the analysis result. In this case, the object detection device 230 uses a pattern matching technique or the like to identify whether the object included in the image data is a vehicle, a pedestrian, or a traffic sign. In addition or alternatively, the object detection device 230 may process the acquired image data to detect the distance from the subject vehicle to an object existing around the subject vehicle or the relative positional relationship between the object and the subject vehicle on the basis of the position of the object.

The object detection device 230 may include a radar device 232. Examples of the radar device 232 include those, such as millimeter-wave radar, laser radar, and ultrasonic radar, which are of schemes known at the time of filing of the present application. The object detection device 230 detects presence or absence of objects, positions of the objects, and distances to the objects on the basis of received signals from the radar device 232. The object detection device 230 may detect presence or absence of objects, positions of the objects, and distances to the objects on the basis of clustering results of point cloud information which is acquired using laser radar.

When the subject vehicle and another vehicle are capable of vehicle-to-vehicle communication, the object detection device 230 may acquire the vehicle speed and acceleration of the other vehicle which are detected by the vehicle speed sensor of the other vehicle, as object information. In addition or alternatively, the object detection device 230 can acquire the object information, which includes the position, speed, and acceleration of another vehicle, from external devices of the Intelligent Transport Systems (ITS).

The lane departure prevention device 240 includes a camera 241 and a database that stores road information 242. The camera 231 of the object detection device may be shared as the camera 241. The road information 223 of the navigation device may be shared as the road information 242. The lane departure prevention device 240 has a lane departure prevention function (lane keep support function) of recognizing a lane in which the subject vehicle is traveling from the images captured by the camera 241 and controlling the moving behavior of the subject vehicle so as to keep a certain relationship between the position of a lane marker of the lane and the position of the subject vehicle. The driving assistance apparatus 100 plans a driving action such that the subject vehicle travels along the center of the lane. In addition or alternatively, the driving assistance apparatus 100 may plan a driving action such that the distance from a lane marker of the lane to the subject vehicle along the road width direction falls within a predetermined range of value. The lane marker is not limited, provided that it has a function of defining a lane. The lane marker may be a diagrammatic mark drawn on a road surface, a planting that exists between lanes, or a road structure that exists on the side of a road shoulder of a lane, such as a guardrail, a curbstone, a sidewalk, or an exclusive road for two-wheel vehicles. The lane marker may also be a fixed structure that exists on the side of a road shoulder of a lane, such as an advertising display, a traffic sign, a store, or a roadside tree.

An evaluation processor 11, which will be described later, stores an object detected by the object detection device 230 so that the detected object is associated with a route. In other words, the evaluation processor 11 retains information as to which route the object exists on.

The onboard apparatus 200 includes the output device 250. The output device 250 includes a display 251 and a speaker 252. The output device 250 outputs various information items regarding the driving assistance to the user or to passengers of surrounding vehicles. The various information items regarding the driving assistance include those regarding a driving action plan and travel control based on the driving action plan. The output device 250 preliminarily informs the subject vehicle's passengers that the steering operation and/or acceleration or deceleration will be executed via the display 251 and/or speaker 252, as information in accordance with the control information for the subject vehicle to travel on a planned travel route. In addition or alternatively, the passengers of the subject vehicle or the passengers of other vehicles may be preliminarily informed of such information items regarding the driving assistance via exterior lamps and/or interior lamps. In addition or alternatively, various information items regarding the driving assistance may be output to external devices of the Intelligent Transport Systems (ITS) and the like via a communication network.

The driving assistance apparatus 100 comprises a scene evaluation device 10, a drive planning device 20, and an output device 30. The output device 30 achieves the same functions as those of the previously-described output device 250 of the onboard apparatus 200 using the display 251 and the speaker 252. These devices can exchange information with one another via wired or wireless communication lines.

The scene evaluation device 10 includes an evaluation processor 11 that serves as a control device of the scene evaluation device 10. The evaluation processor 11 is a calculation device that is used to, when determining a driving action of the subject vehicle, evaluate a scene which the subject vehicle traveling on a route encounters. Specifically, the evaluation processor 11 is a computer comprising a read only memory (ROM) that stores programs for executing a process of evaluating a scene which the subject vehicle encounters, a central processing unit (CPU) as an operation circuit that executes the programs stored in the ROM to serve as the scene evaluation device 10, and a random access memory (RAM) that serves as an accessible storage device. The evaluation processor 11 is provided with a storage medium that stores programs for executing the process of evaluating a scene which the subject vehicle encounters.

The evaluation processor 11 of the scene evaluation device 10 executes the following processes:

(1) a process of acquiring the current position of the subject vehicle and a target route (subject vehicle information acquisition process);
(2) a process of acquiring external world information around the subject vehicle (external world information acquisition process);
(3) a process of extracting other vehicles' traffic lines having points of intersection (interference points) with a planned travel route of the subject vehicle (these traffic lines will be referred to as "interference traffic lines," hereinafter) (interference traffic line extraction process); and
(4) a process of selecting an interference traffic line necessary for determining a driving action (referred to as a "necessary traffic line," hereinafter) from among the extracted interference traffic lines (necessary traffic line selection process).

The term "traffic lines" as used herein refers to concepts including not only lines with which the width may be inconceivable but also those, such as lanes and roads, with which the width is conceivable.

The evaluation processor 11 has a block that realizes a subject vehicle information acquisition function, a block that realizes an external world information acquisition function, a block that realizes a traffic line extraction function, and a block that realizes a traffic line selection process. The evaluation processor 11 executes each of the above functions by cooperation of software for realizing each function and the above-described hardware.

In the subject vehicle information acquisition process, the evaluation processor 11 acquires the current position of the subject vehicle and a target route from the current position of the subject vehicle to a destination, from the navigation device 220. In the external world information acquisition process, the evaluation processor 11 acquires the external world information including the state of traffic signals around the subject vehicle, the presence or absence of other vehicles traveling in parallel, etc., from the object detection device 230 or utilizing a communication network.

In the interference traffic line extraction process, the evaluation processor 11 calculates a planned travel route of the subject vehicle on the basis of the current position of the subject vehicle, the target route, the map information 222, and the road information 223 and extracts other vehicles' traffic lines having points of intersection (interference points) with the planned travel route of the subject vehicle. The evaluation processor 11 calculates the planned travel route which is different from the target route calculated by the navigation device 220 and in which even the traveling lane for the subject vehicle is specified. Examples of the method of calculating the planned travel route include calculation methods based on a graph search algorithm, such as Dijkstra's algorithm or A* search algorithm. Such a calculation method includes setting links that represent the travel route and nodes that are points at which the links are connected to one another and setting a weighting for each of the links. Here, the weighting is set small for a recommended link corresponding to the lane for traveling toward the destination and set large for a link that is not the recommended link. Then, a lane in which the total sum of weightings from the current position of the subject vehicle to the destination is small is specified as the lane of the planned travel route.

The evaluation processor 11 refers to the road information 223 to extract the interference traffic lines of other vehicles. Information on the interference traffic lines may be acquired from a database equipped in the subject vehicle or may also be acquired from an external database via a communication network.

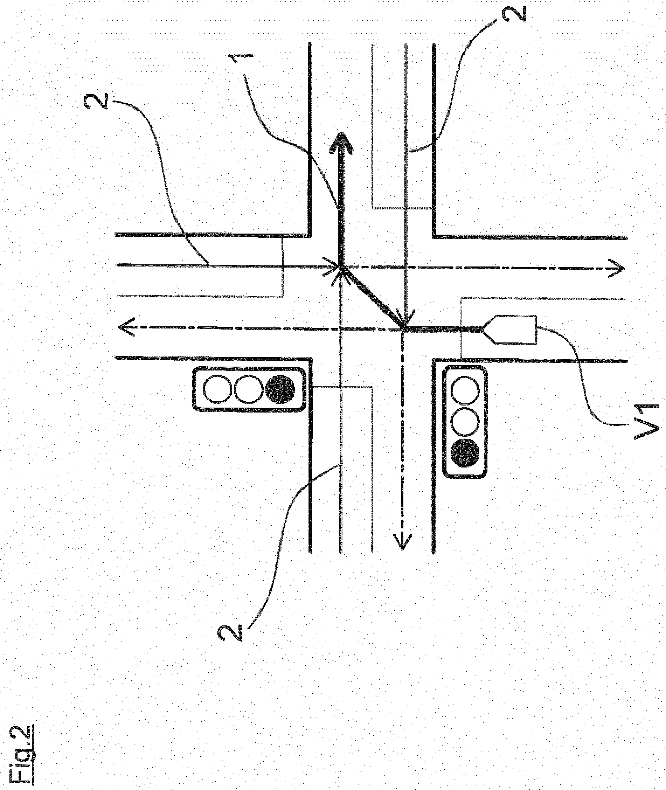

FIG. 2 is a diagram for describing a method of extracting interference traffic lines 2 of other vehicles at an intersection. In the figure, a planned travel route 1 of the subject vehicle V1 is indicated by a thick solid line and the traffic lines of other vehicles are indicated by thin solid lines or dashed-dotted lines. As illustrated in the figure, one traffic line exists in each lane, and the traffic lines indicated by thin solid lines are the interference traffic lines 2 of other vehicles extracted by the evaluation processor 11. Lengths of the interference traffic lines 2 of other vehicles are set to sufficient lengths for the subject vehicle V1 to determine its driving action.

In the necessary traffic line selection process, the evaluation processor 11 selects a necessary traffic line from among the interference traffic lines 2 of other vehicles extracted in the interference traffic line extraction process. Examples of the method of selecting a necessary traffic line include a method of selecting the necessary traffic line in accordance with the state of traffic signals, a method of selecting the necessary traffic line in accordance with the planned travel routes of other vehicles traveling parallel to the subject vehicle V1 and the priority level under the traffic rules, and a method of selecting the necessary traffic line in accordance with the traffic rules.

The traffic line selection function of the evaluation processor 11 includes a signal information management function. In a signal information management process, the evaluation processor 11 manages the information on traffic signals acquired by the object detection device 230 and selects a necessary traffic line in accordance with the state of the traffic signals. The signal information management function includes a signal state switching function. In a signal state switching process, the evaluation processor 11 switches the necessary traffic line when the state of the traffic signals changes. The information on the traffic signals may also be acquired via a communication network.

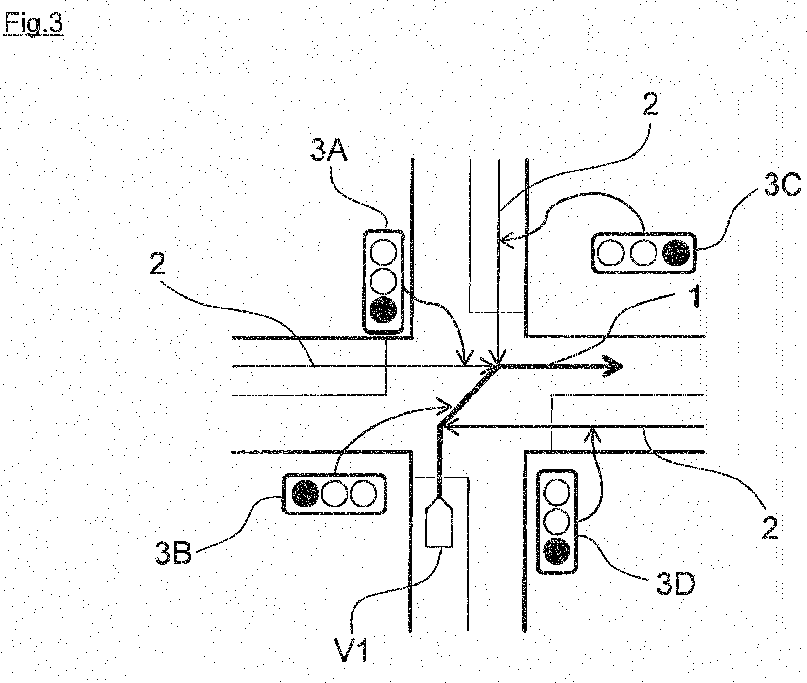

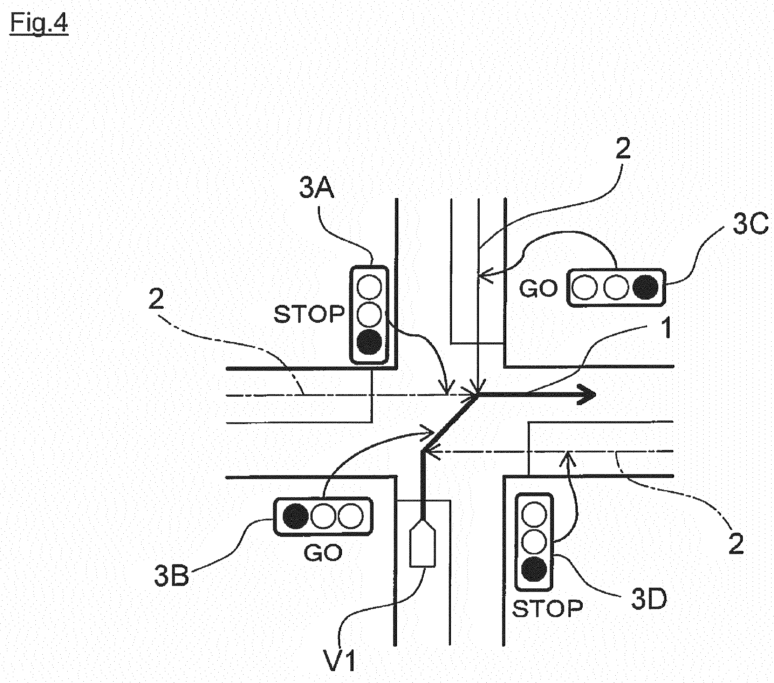

FIG. 3 and FIG. 4 are diagrams for describing a process of selecting a necessary traffic line in accordance with the state of traffic signals 3A to 3D at an intersection. As illustrated in these figures, when the traffic signal 3B corresponding to the planned travel route 1 of the subject vehicle V1 is present at the intersection, the evaluation processor 11 associates the interference traffic lines 2 of other vehicles with the traffic signals in the signal information management process. The correspondence relationship between the traffic line of each lane and the traffic signal is included in the road information 223, and the evaluation processor 11 reads out the correspondence relationships between the interference traffic lines 2 of other vehicles and the traffic signals from the road information 223. In the scene illustrated in FIG. 3, the traffic signal 3A corresponds to the interference traffic line 2 which merges into the planned travel route 1 of the subject vehicle V1 from the left side, the traffic signal 3C corresponds to the interference traffic line 2 which intersects with the planned travel route 1 of the subject vehicle V1 from ahead, and the traffic signal 3D corresponds to the interference traffic line 2 which intersects with the planned travel route 1 of the subject vehicle V1 from the right side.

The evaluation processor 11 acquires the information on the traffic signals corresponding to the interference traffic lines 2 of other vehicles by the object detection device 230 or via a communication network. The evaluation processor 11 determines whether the traffic signals corresponding to the interference traffic lines 2 of other vehicles are in a passable state, such as a green signal or a straight arrow signal, or in an impassable state, such as a red signal. Then, the evaluation processor 11 selects an interference traffic line 2 corresponding to the traffic signal in the passable state as the necessary traffic line while excluding interference traffic lines 2 corresponding to the traffic signals in the impassable state from candidates for the necessary traffic line.

In the scene illustrated in FIG. 4, the traffic signal 3A corresponding to the interference traffic line 2 which merges into the planned travel route 1 of the subject vehicle V1 from the left side is a red signal and thus in the impassable state, and the interference traffic line 2 corresponding to the traffic signal 3A is therefore excluded from candidates for the necessary traffic line. Likewise, the traffic signal 3D corresponding to the interference traffic line 2 which intersects with the planned travel route 1 of the subject vehicle V1 from the right side is a red signal and thus in the impassable state, and the interference traffic line 2 corresponding to the traffic signal 3D is therefore excluded from candidates for the necessary traffic line. On the other hand, the traffic signal 3C corresponding to the interference traffic line 2 which intersects with the planned travel route 1 of the subject vehicle V1 from ahead is a green signal and thus in the passable state, and the interference traffic line 2 corresponding to the traffic signal 3C is therefore selected as the necessary traffic line.

In the signal state switching process, the evaluation processor 11 determines whether the state of a traffic signal has changed from the passable state to the impassable state or from the impassable state to the passable state. Then, when the state of a traffic signal has changed from the passable state to the impassable state, the evaluation processor 11 calculates a delay time from the change of the state of the traffic signal to the switching of the necessary traffic line.

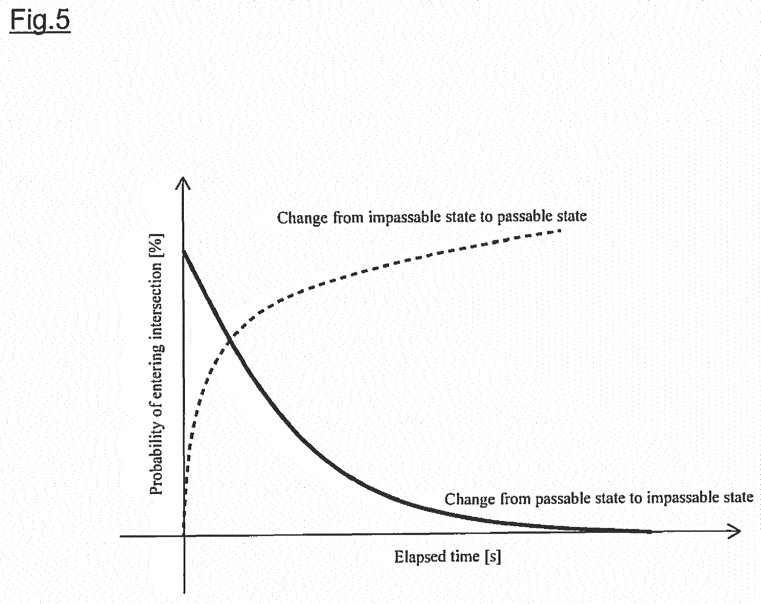

Here, FIG. 5 is a graph illustrating the relationship between an elapsed time [s] from the change of the state of a traffic signal corresponding to an interference traffic line 2 and the probability [%] that another vehicle enters the intersection. As indicated by the solid line in the graph, when the state of a traffic signal corresponding to an interference traffic line 2 changes from the passable state to the impassable state, the probability that another vehicle enters the intersection along the interference traffic line 2 decreases with time from the high probability immediately after the change. On the other hand, as indicated by the broken line in the graph of FIG. 5, when the state of a traffic signal corresponding to an interference traffic line 2 changes from the impassable state to the passable state, the probability that another vehicle enters the intersection along the interference traffic line 2 increases with time from the low probability immediately after the change.

Thus, until a certain period of time (e.g. several seconds) elapses from immediately after the traffic signal corresponding to the interference traffic line 2 selected as the necessary traffic line changes from the passable state to the impassable state, the probability remains that another vehicle enters the intersection along the interference traffic line 2. On the other hand, the probability that another vehicle enters the intersection along an interference traffic line 2 increases in a relatively short period of time immediately after the state of the traffic signal corresponding to the interference traffic line 2 changes from the impassable state to the passable state.

The evaluation processor 11 therefore excludes the interference traffic line 2 selected as the necessary traffic line from candidates for the necessary traffic line at a time point when a predetermined delay time (e.g. several seconds) elapses after the traffic signal corresponding to the interference traffic line 2 selected as the necessary traffic line changes from the passable state to the impassable state, and selects an interference traffic line 2 excluded from candidates for the necessary traffic line as the necessary traffic line immediately after the traffic signal corresponding to the interference traffic line 2 changes from the impassable state to the passable state. This responds to another vehicle entering the intersection after the state of the traffic signals is switched.

Here, when the traffic signal corresponding to the interference traffic line 2 selected as the necessary traffic line changes from the passable state to the impassable state, the evaluation processor 11 gradually reduces the length of the interference traffic line selected as the necessary traffic line until the predetermined delay time elapses from the change, finally to zero when the predetermined delay time elapses.

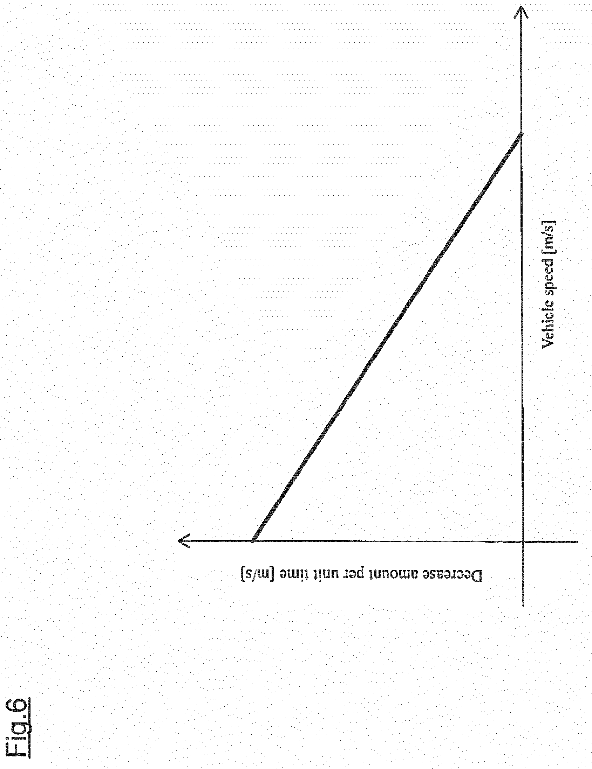

FIG. 6 is a graph illustrating the relationship between a decrease amount [m/s] per unit time of the length of an interference traffic line 2 selected as the necessary traffic line and the vehicle speed [m/s] of another vehicle entering the intersection along the interference traffic line 2 selected as the necessary traffic line. As illustrated in the graph, when the traffic signal corresponding to an interference traffic line 2 selected as the necessary traffic line has changed from the passable state to the impassable state, the evaluation processor 11 reduces the length of the interference traffic line 2 selected as the necessary traffic line at a decrease amount per unit time in accordance with the vehicle speed of another vehicle entering the intersection along the interference traffic line 2. Here, as the vehicle speed of another vehicle increases, the decrease amount per unit of the length of the interference traffic line 2 as the necessary traffic line is reduced thereby to allow for a determination of the driving action to respond to another vehicle traveling along the interference traffic line 2 at a high speed.

The traffic line selection function of the evaluation processor 11 includes a surrounding information management function. In a surrounding information management process, when the planned travel route of another vehicle traveling parallel to the subject vehicle V1 (referred to as a "parallel traveling vehicle," hereinafter) intersects with the interference traffic line 2 of still another vehicle, the evaluation processor 11 selects the necessary traffic line in accordance with the priority level under the traffic rules. The planned travel route of the parallel traveling vehicle is acquired by the object detection device 230.

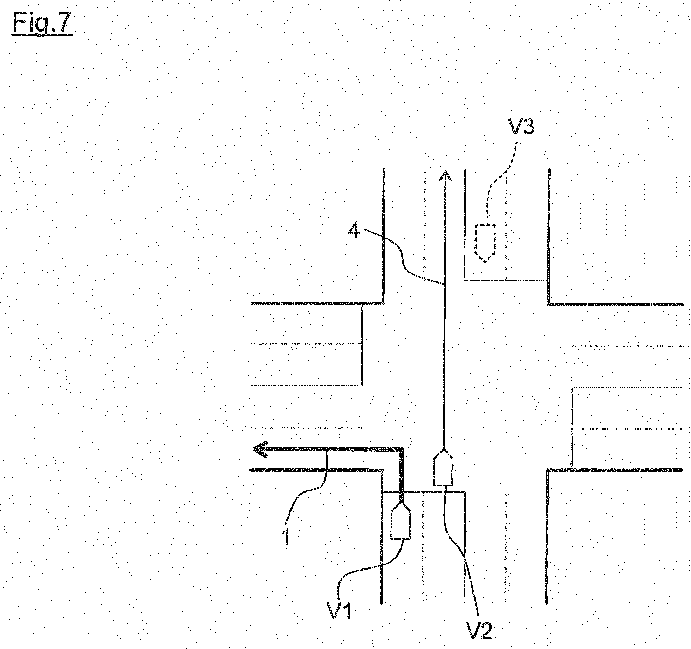

FIG. 7 to FIG. 9 are diagrams for describing a process of selecting the necessary traffic line at an intersection in accordance with a planned travel route 4 of a parallel traveling vehicle V2 and the priority level under the traffic rules. As illustrated in these figures, when the parallel traveling vehicle V2 entering the intersection exists, the evaluation processor 11 calculates the planned travel route 4 of the parallel traveling vehicle V2 in the surrounding information management process. In the process of calculating the planned travel route 4 of the parallel traveling vehicle V2, first, the evaluation processor 11 acquires information on the positions, speeds, and movement vectors of other vehicles around the subject vehicle V1 from the object detection device 230. The information on other vehicles around the subject vehicle V1 may also be acquired by vehicle-to-vehicle communication or road-to-vehicle communication.

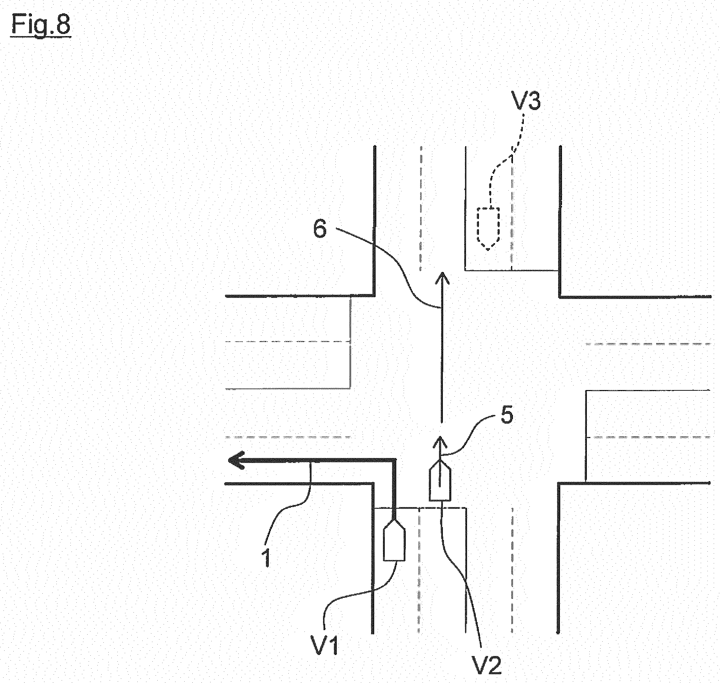

The evaluation processor 11 compares the vector 5 (see FIG. 8) of the parallel traveling vehicle V2 acquired from the object detection device 230 or the like with the traffic line 6 of the parallel traveling vehicle V2 on the traveling lane. When the vector 5 and the traffic line 6 are in the same direction, the evaluation processor 11 employs the traffic line 6 on the traveling lane as the planned travel route 4 of the parallel traveling vehicle V2.

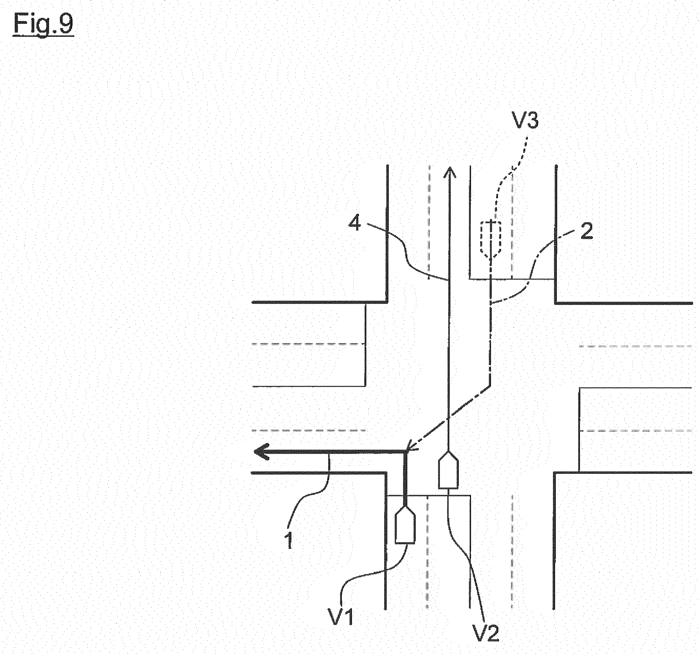

As illustrated in FIG. 9, when the planned travel route 4 of the parallel traveling vehicle V 2 intersects with the interference traffic line 2 of another vehicle V3, the evaluation processor 11 calculates the priority levels of the parallel traveling vehicle V2 and the other vehicle V3 traveling along the interference traffic line 2. Here, the priority levels of vehicles passing through an intersection are determined by the traffic rules. For example, as illustrated in FIG. 9, the parallel traveling vehicle V2 has a higher priority level than that of the other vehicle V3 turning right at the intersection because the parallel traveling vehicle V2 is traveling straight ahead in the oncoming lane. The evaluation processor 11 therefore calculates the priority levels of the parallel traveling vehicle V2 traveling on the planned travel route 4 and the other vehicle V3 traveling along the interference traffic line 2 on the basis of the traffic rules.

When the priority level of the parallel traveling vehicle V2 traveling on the planned travel route 4 is higher than the priority level of the other vehicle V3 traveling along the interference traffic line 2, the evaluation processor 11 excludes the interference traffic line 2 from candidates for the necessary traffic line. On the other hand, when the priority level of the parallel traveling vehicle V2 traveling on the planned travel route 4 is lower than the priority level of the other vehicle V3 traveling along the interference traffic line 2, the evaluation processor 11 selects the interference traffic line 2 as the necessary traffic line.

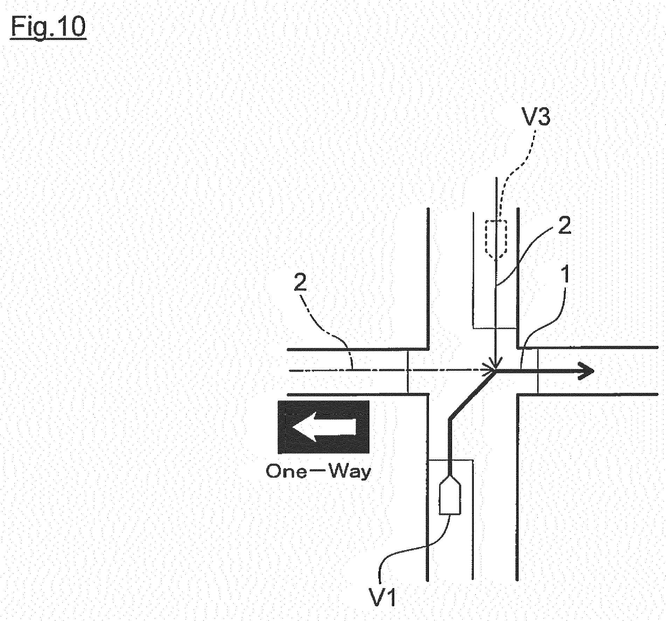

Theevaluation processor 11 includes an impassable factor analysis function. In an impassable factor analysis process, the evaluation processor 11 analyzes the traffic rules of a road to exclude the interference traffic line 2, through which another vehicle V3 is restricted from passing due to the traffic rules, from candidates for the necessary traffic line (see FIG. 10 to FIG. 12). The evaluation processor 11 refers to the road information 223 and the traffic rule information 224 to extract traffic rules associated with the lane to which the planned travel route 1 of the subject vehicle V1 belongs and the lane to which the interference traffic line 2 belongs, and extracts a factor that restricts the traffic of another vehicle V3 from among the extracted traffic rules. Then, the evaluation processor 11 cross-checks the extracted factor with the interference traffic line 2 to determine whether or not the other vehicle V3 is restricted from traveling along the interference traffic line 2 due to the traffic restriction for the other vehicle V3 under the traffic rules, and excludes the restricted interference traffic line 2 from candidates for the necessary traffic line.

FIG. 10 to FIG. 12 are diagrams for describing processes of selecting the necessary traffic line in accordance with the traffic rules on a road. In the scene illustrated in FIG. 10, the road to which the interference traffic line 2 belongs has a restriction of WRONG WAY for vehicles due to a traffic rule of ONE-WAY, and the traveling direction along the interference traffic line 2 is opposite to the traveling direction in conformity with the traffic rule of ONE-WAY. In this case, the evaluation processor 11 extracts a factor of WRONG WAY for vehicles due to the traffic rule of ONE-WAY, cross-checks this factor with the interference traffic line 2 of another vehicle V3, determines that the other vehicle V3 is restricted from traveling along the interference traffic line 2, and excludes the interference traffic line 2 from candidates for the necessary traffic line.

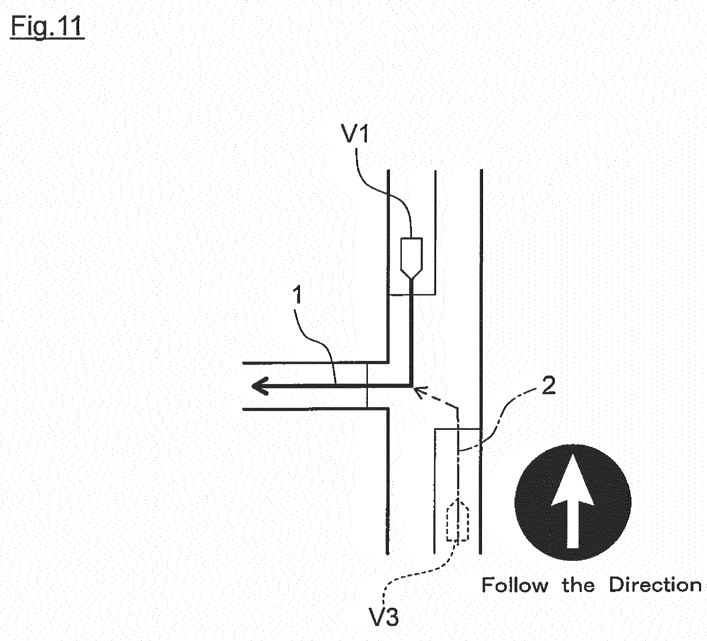

In the scene illustrated in FIG. 11, the road to which the interference traffic line 2 of another vehicle V3 belongs has a restriction of NO LEFT TURN for vehicles due to a traffic rule of FOLLOW THE DIRECTION, and the other vehicle V3 is restricted from entering the road to which the planned travel route 1 of the subject vehicle V1 belongs. In this case, the evaluation processor 11 extracts a factor of WRONG WAY for vehicles due to the traffic rule of FOLLOW THE DIRECTION, cross-checks this factor with the interference traffic line 2 of the other vehicle V3, determines that the other vehicle V3 is restricted from traveling along the interference traffic line 2, and excludes the interference traffic line 2 from candidates for the necessary traffic line.

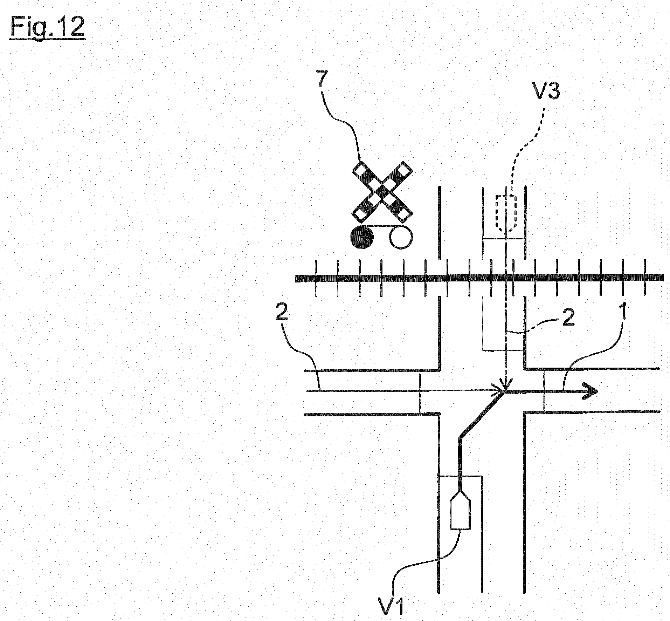

In the scene illustrated in FIG. 12, the road to which the interference traffic line 2 of another vehicle V3 belongs has a restriction of temporary prohibition of entry due to a traffic rule of STOP at the crossing bar of a railroad crossing 7, and the other vehicle V3 is temporarily restricted from entering the intersection to which the planned travel route 1 of the subject vehicle V1 belongs. In this case, the evaluation processor 11 extracts a factor of prohibition of entry of vehicles due to the traffic rule of STOP at the crossing bar of the railroad crossing 7, cross-checks this factor with the interference traffic line 2 of the other vehicle V3, determines that the other vehicle V3 is restricted from entering the intersection along the interference traffic line 2, and excludes the interference traffic line 2 from candidates for the necessary traffic line.

As illustrated in FIG. 1, the drive planning device 20 includes a drive planning processor 21. The drive planning processor 21 plans a driving action of the subject vehicle V1 traveling along the planned travel route 1. The drive planning processor 21 acquires selection information of the necessary traffic line from the evaluation processor 11. The drive planning processor 21 plans the driving action to avoid contact of the subject vehicle V1 with objects existing around the subject vehicle V1 in accordance with the relationship between the necessary traffic line selected by the evaluation processor 11 and the subject vehicle V1 and the existence of objects detected by the object detection device 230.

The drive planning processor 21 is a computer comprising a read only memory (ROM) that stores programs for executing a process of planning the driving actions including traveling/stopping of the subject vehicle V1, a central processing unit (CPU) as an operation circuit that executes the programs stored in the ROM to serve as the drive planning device 20, and a random access memory (RAM) that serves as an accessible storage device.

The drive planning processor 21 determines a driving action to respond to another vehicle V3 traveling along the necessary traffic line selected by the evaluation processor 11. Driving actions to be determined include a traveling action and a stopping action. The drive planning processor 21 determines either the traveling action or the stopping action for each necessary traffic line. The drive planning processor 21 comprehensively takes into account the content of each action determined for each necessary traffic line to plan a series of driving actions for a scene which the subject vehicle encounters. Through this operation, the driving action can be planned in which it is made clear where the subject vehicle should make a stop from start of passing through a scene to completion of passing through the scene.

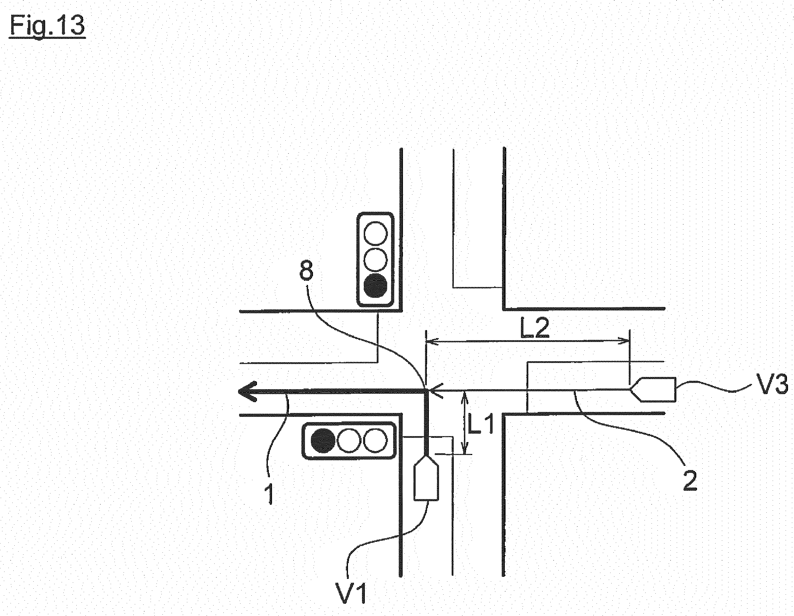

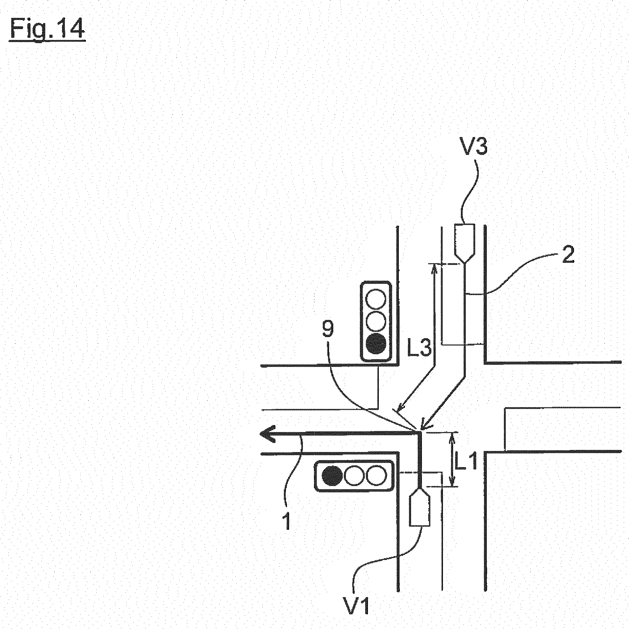

FIG. 13 is a diagram for describing a scheme of determining a driving action to respond to the interference traffic line 2 of another vehicle V3 which intersects with the planned travel route 1 of the subject vehicle V1 from the right side. FIG. 14 is a diagram for describing a scheme of determining a driving action to respond to the interference traffic line 2 of another vehicle V3 which intersects with the planned travel route 1 of the subject vehicle V1 after right turn from the oncoming lane.

In the scene illustrated in FIG. 13, the drive planning processor 21 determines the driving action to be taken for an event that the subject vehicle V1 passes through a point at which the planned travel route 1 of the subject vehicle V1 intersects with the interference traffic line 2 of another vehicle V3. The drive planning processor 21 calculates the positional relationship between the subject vehicle V1 and the other vehicle V3 associated with the interference traffic line 2 and the change in the positional relationship (degree of approaching). On the basis of the time remaining for the subject vehicle V1 to come into contact with the other vehicle V3, the drive planning processor 21 determines whether or not the subject vehicle V1 can pass through a point of intersection 8 between the planned travel route 1 and the interference traffic line 2 without coming into contact with the other vehicle V3.

The drive planning processor 21 calculates an estimated time for each of the subject vehicle V1 and the other vehicle V3 to arrive at the point of intersection 8 and determines whether or not the subject vehicle V1 can pass through the point of intersection 8 with a margin. Assume, for example, that the speed of the subject vehicle V1 is VV1, the distance from the subject vehicle V1 to the point of intersection 8 is L1, the speed of the other vehicle V3 is VV2, and the distance from the other vehicle V3 to the point of intersection 8 is L2.

When the following Expression (1) is satisfied, the drive planning processor 21 determines that the subject vehicle V1 is highly likely to come into contact with the other vehicle V3 at the point of intersection 8, and determines that the driving action at the point of intersection 8 is "stopping." As used herein, $T_{threshold}$ represents a margin time that is set with consideration for the safety when vehicles cross each other.

$$|L2/VV2 - L1/VV1| < T_{threshold} \qquad (1)$$

On the other hand, when the following Expression (2) is satisfied, the drive planning processor 21 determines that the subject vehicle V1 is unlikely to come into contact with the other vehicle V3 at the point of intersection 8, and determines that the driving action at the point of intersection 8 is "traveling."

$$|L2/VV2 - L1/VV1| \geq T_{threshold} \qquad (2)$$

In the scene illustrated in FIG. 14, the drive planning processor 21 determines the driving action to be taken for an event that the subject vehicle V1 passes through a point at which the planned travel route 1 of the subject vehicle V1 intersects with the interference traffic line 2 of another vehicle V3. The drive planning processor 21 calculates the positional relationship between the subject vehicle V1 and the other vehicle V3 associated with the interference traffic line 2 and the change in the positional relationship (degree of approaching). On the basis of the time remaining for the subject vehicle V1 to come into contact with the other vehicle V3, the drive planning processor 21 determines whether or not the subject vehicle V1 can pass through a point of intersection 9 between the planned travel route 1 and the interference traffic line 2 without coming into contact with the other vehicle V3.

The drive planning processor 21 calculates an estimated time for each of the subject vehicle V1 and the other vehicle V3 to arrive at the point of intersection 9 and determines whether or not the subject vehicle V1 can pass through the point of intersection 9 with a margin. Assume, for example, that the speed of the subject vehicle V1 is VV1, the distance from the subject vehicle V1 to the point of intersection 9 is L1, the speed of the other vehicle V3 is VV3, and the distance from the other vehicle V3 to the point of intersection 9 is L3. The distance L3 may be calculated with reference to the curvature or the like stored as a part of the road information 223 and may also be calculated with reference to the distance between nodes which is stored as a part of the road information 223.

When the following Expression (3) is satisfied, the drive planning processor 21 determines that the subject vehicle V1 is highly likely to encounter an event of coming into contact with the other vehicle V3 at the point of intersection 9, and determines that the driving action in this event is "stopping."

$$|L3/VV3 - L1/VV1| < T_{threshold} \qquad (3)$$

On the other hand, when the following Expression (4) is satisfied, the drive planning processor 21 determines that the subject vehicle V1 is unlikely to encounter an event of coming into contact with the other vehicle V3 at the point of intersection 9, and determines that the driving action in this event is "traveling."

$$|L3/VV3 - L1/VV1| \geq T_{threshold} \qquad (4)$$

The drive planning processor 21 plans a series of driving actions of the subject vehicle V1 using the relationships with a plurality of interference traffic lines 2 that encounter the planned travel route 1 of the subject vehicle V1 in a time-series manner. The driving actions refer to instructions in which commands of stopping or traveling are associated with respective interference traffic lines 2 that interfere with the planned travel route 1, for example, from when entering a certain area such as an intersection to when exiting the certain area.

When a determination of the traveling action is made for an interference traffic line 2 and a determination of the stopping action or of being undeterminable is made for another interference traffic line 2 to be encountered next to the that interference traffic line 2, the drive planning processor 21 plans a driving action of controlling the subject vehicle V1 to make a stop at the point of intersection between the planned travel route 1 and the interference traffic line 2 for which the traveling action is determined. Even in a case in which the traveling action is once determined, when the interference traffic line 2 which the subject vehicle V1 encounters next requires the stopping action or is undeterminable, the subject vehicle V1 can be controlled to make a stop at a position for which the traveling action is determined. The location for which the traveling action is determined is a location in which the subject vehicle V1 is permitted to stay, and the subject vehicle V1 can therefore be controlled to make a stop in safety.

When the point of intersection between the planned travel route 1 and an interference traffic line 2 for which a determination of the stopping action or of being undeterminable is made belongs to another interference traffic line 2, the drive planning processor 21 plans a driving action of controlling the subject vehicle V1 to make a stop at a position which is located at the further upstream side than the point of intersection and at which stopping is possible. Here, even in a case in which a determination of the stopping action or of being undeterminable is made for an interference traffic line 2, when the stop position corresponding to the interference traffic line 2 belongs to another interference traffic line 2, the subject vehicle V1 may obstruct another vehicle V3 traveling along the other interference traffic line 2. Thus, the stop position is inappropriate. The driving action is therefore planned such that the stop position is set at the upstream position at which stopping is possible, rather than within the other interference traffic line 2.

When a determination of the stopping action or of being undeterminable is made for an interference traffic line 2 and the point of intersection between the interference traffic line 2 and the planned travel route 1 is close to or overlaps the point of intersection between another interference traffic line 2 and the planned travel route 1 so that these points of intersection are located within a predetermined distance, the drive planning processor 21 plans a driving action of controlling the subject vehicle V1 to make a stop at a position which is located at the further upstream side than these points of intersection and at which stopping is possible. Even in a case in which a determination of the stopping action or of being undeterminable is made for an interference traffic line 2, when the stop position for the interference traffic line 2 is close to or overlaps the stop position for another interference traffic line 2, matching with the determination for the other interference traffic line 2 may have to be taken into account. The stop position is therefore inappropriate. The driving action is therefore planned such that the stop position is set at the upstream position at which stopping is possible, rather than within the other interference traffic line 2. This can reduce the cases of being undeterminable. Moreover, the load of determination processes can be reduced and the subject vehicle V1 can travel smoothly without repeating stop-and-go driving.

When a determination of the traveling action is made for one interference traffic line 2 and a determination of the stopping action or of being undeterminable is made for another interference traffic line 2 to be encountered next to the one interference traffic line 2, the drive planning processor 21 plans a driving action of controlling the subject vehicle V1 to travel along the one interference traffic line 2, provided that a degree of separation between the one interference traffic line 2 and the other interference traffic line 2 is a predetermined value or more. When traveling is permitted for one interference traffic line 2, but a determination of the stopping action or of being undeterminable is made for another interference traffic line 2 to be thereafter encountered, if the subject vehicle V1 is controlled to make a stop at the upstream one interference traffic line 2, a determination has to be made again as to whether or not the traveling along the other interference traffic line 2 is allowed, and the subject vehicle V1 may interfere with the traffic stream of another vehicle V3 on the other interference traffic line 2. Thus, when separate events are determined in different ways: "traveling" at the upstream side and "stopping" at the downstream side, a driving action of controlling the subject vehicle V1 to travel along the upstream interference traffic line 2 is planned thereby to prevent the process from being complexed.

Here, when the road to which an interference traffic line 2 belongs is included in the detection range of the object detection device 230, the drive planning processor 21 determines a driving action and outputs it to the vehicle controller 210. The vehicle controller 210 outputs control signals to the drive device 270 and the steering device 280 when a driving action is output from the drive planning processor 21. This allows the drive device 270 and/or the steering device 280 to be controlled in a completely automated manner or in a form of assisting with the driving operation (traveling operation) of the driver.

On the other hand, when the road to which an interference traffic line 2 belongs is not included in the detection range of the object detection device 230, the drive planning processor 21 cannot determine a driving action because of an undeterminable state and therefore does not output a driving action to the vehicle controller 210. In this case, the vehicle controller 210 does not output control signals to the drive device 270 and the steering device 280, and the control of the drive device 270 and steering device 280 performed in a completely automated manner or in a form of assisting with the driving operation of the driver is suspended/canceled.

The drive planning processor 21 determines a driving action to respond to the necessary traffic line selected by the evaluation processor 11 and outputs the driving action to the vehicle controller 210, but does not determine a driving action for an interference traffic line 2 that is excluded from candidates for the necessary traffic line by the evaluation processor 11. Here, the detection range for objects assigned to the object detection device 230 includes not only a range to which the necessary traffic line belongs but also a range to which the necessary traffic line does not belong. When detecting an object, the object detection device 230 outputs the detection signal to the vehicle controller 210 even while the control of the drive device 270 and steering device 280 is performed in a completely automated manner or in a form of assisting with the driving operation of the driver. When the object detection device 230 detects an object in a range to which the necessary traffic line does not belong while the control of the drive device 270 and steering device 280 is performed in a completely automated manner or the like, the vehicle controller 210 may suspend/cancel the control of the drive device 270 and steering device 280, which is performed in a completely automated manner or the like, in accordance with the positional relationship between the detected object and the subject vehicle V1 and/or may output control signals for avoiding contact between the subject vehicle V1 and the object to the drive device 270 and the steering device 280.

The output device 30 includes an output control processor 31. The output control processor 31 displays information using the display 251 as the output device 30. The output control processor 31 displays information items representing the interference traffic lines 2 selected by the evaluation processor in the order of encounters with the subject vehicle V1 and in a side-by-side fashion.

The output control processor 31 is a computer comprising a read only memory (ROM) that stores programs for executing a process of displaying the information items representing the interference traffic lines, a central processing unit (CPU) as an operation circuit that executes the programs stored in the ROM to serve as the output device 30, and a random access memory (RAM) that serves as an accessible storage device.

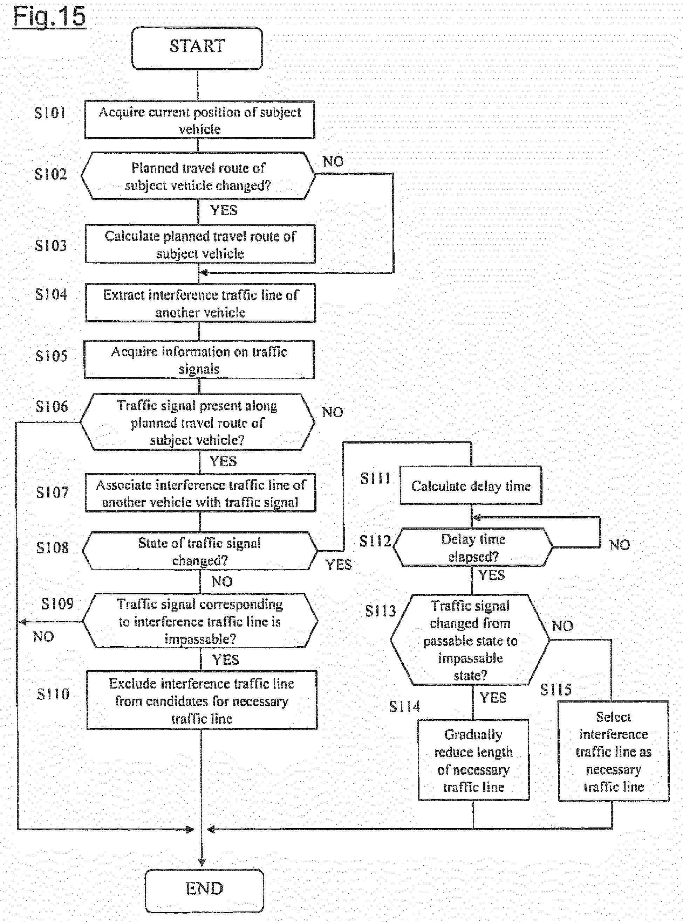

FIG. 15 is a flowchart for describing a process of selecting a necessary traffic line in accordance with the state of traffic signals using the evaluation processor 11 of the scene evaluation device 10 (see FIG. 2 to FIG. 6). As illustrated in the flowchart, first, in step S101, the evaluation processor 11 acquires the current position of the subject vehicle V1 from the navigation device 220. Then, in step S102, the evaluation processor 11 determines whether or not the calculated planned travel route 1 of the subject vehicle V1 is changed. A negative determination in this step is followed by step S104 while an affirmative determination is followed by step S103. In step S103, the evaluation processor 11 calculates the planned travel route 1 of the subject vehicle V1 on the basis of the current position of the subject vehicle V1, the target route, and the map information 222.

Then, in step S104, the evaluation processor 11 extracts the interference traffic line 2 of another vehicle V3 on the basis of the calculated planned travel route 1 of the subject vehicle V1, the map information 222, and the road information 223. Then, in step S105, the evaluation processor 11 acquires information on traffic signals around the subject vehicle V1 from the object detection device 230 or the like.

Then, in step S106, the evaluation processor 11 determines whether or not a traffic signal corresponding to the planned travel route 1 of the subject vehicle V1 is present. An affirmative determination in this step is followed by step S107. When a negative determination is made, the process is ended.

In step S107, the evaluation processor 11 refers to the road information 223 to associate the interference traffic line 2 of the other vehicle V3 with a traffic signal. Then, in step S108, the evaluation processor 11 determines whether or not the state of the traffic signal changes between the previous process and the current process. An affirmative determination in this step is followed by step S111 while a negative determination is followed by step S109.

In step S109, the evaluation processor 11 determines whether or not the traffic signal corresponding to the interference traffic line 2 of the other vehicle V3 is in an impassable state. An affirmative determination in this step is followed by step S110. When a negative determination is made, the process is ended. Through this operation, the interference traffic line 2 corresponding to the traffic signal in a passable state is selected as the necessary traffic line. On the other hand, in step S110, the evaluation processor 11 excludes the interference traffic line 2 corresponding to the traffic signal in the impassable state from candidates for the necessary traffic line.

In step S111, the evaluation processor 11 calculates a delay time from the change of the state of the traffic signal to the switching of the necessary traffic line. Then, in step S112, the evaluation processor 11 determines whether or not the above delay time has elapsed after the state of the traffic signal changed. An affirmative determination in this step is followed by step S113.

In step S113, the evaluation processor 11 determines whether or not the traffic signal has changed from the passable state to the impassable state. An affirmative determination in this step is followed by step S114 while a negative determination is followed by step S115.

In step S114, the evaluation processor 11 gradually reduces the length of the necessary traffic line in accordance with the vehicle speed of the other vehicle V3 entering the intersection along the interference traffic line 2, which is selected as the necessary traffic line, while the above delay dime elapses after the traffic signal changes from the passable state to the impassable state. On the other hand, in step S115, the evaluation processor 11 selects the interference traffic line 2 corresponding to the traffic signal, which has changed from the impassable state to the passable state, immediately after the change (without waiting the elapse of the above delay time). The process is thus completed.

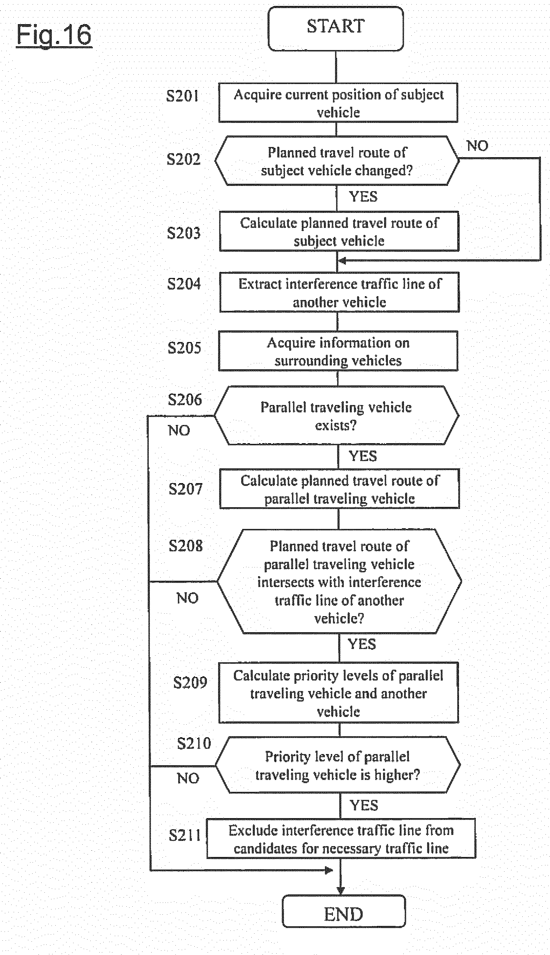

FIG. 16 is a flowchart for describing a process of selecting a necessary traffic line in accordance with the planned travel route 4 of the parallel traveling vehicle V2 and the priority level under the traffic rules using the evaluation processor 11 (see FIG. 7 to FIG. 9). Steps S201 to S204 illustrated in this flowchart are the same as steps S101 to S104 illustrated in the flowchart of FIG. 15, so repetitive description will be omitted and the already-explained description will be borrowed herein.

Step S204 is followed by step S205 in which the evaluation processor 11 acquires information on the positions, speeds, and movement vectors of other vehicles around the subject vehicle V1 from the object detection device 230 or the like. Then, in step S206, the evaluation processor 11 determines whether or not a parallel traveling vehicle V2 traveling parallel to the subject vehicle V1 exists, on the basis of the information acquired from the object detection device 230 or the like. An affirmative determination in this step is followed by step S207. When a negative determination is made, the process is ended.

In step S207, the evaluation processor 11 calculates the planned travel route 4 of the parallel traveling vehicle V2. Then, in step S208, the evaluation processor 11 determines whether or not the interference traffic line 2 of another vehicle V3 intersecting with the planned travel route 4 of the parallel traveling vehicle V2 exists. An affirmative determination in this step is followed by step S209. When a negative determination is made, the process is ended.

In step S209, the evaluation processor 11 calculates the priority levels under traffic rules of the parallel traveling vehicle V2 the other vehicle V3 which is traveling along the interference traffic line 2. Then, in step S210, the evaluation processor 11 determines whether or not the priority level of the parallel traveling vehicle V2 is higher than the priority level of the other vehicle V3 traveling along the interference traffic line 2. An affirmative determination in this step is followed by step S211. When a negative determination is made, the process is ended. Through this operation, the interference traffic line 2 along which the other vehicle V3 having a higher priority level than that of the parallel traveling vehicle V2 travels is selected as the necessary traffic line. On the other hand, in step S211, the evaluation processor 11 excludes the interference traffic line 2 along which the other vehicle V3 having a lower priority level than that of the parallel traveling vehicle V2 travels, from candidates for the necessary traffic line. The process is thus completed.

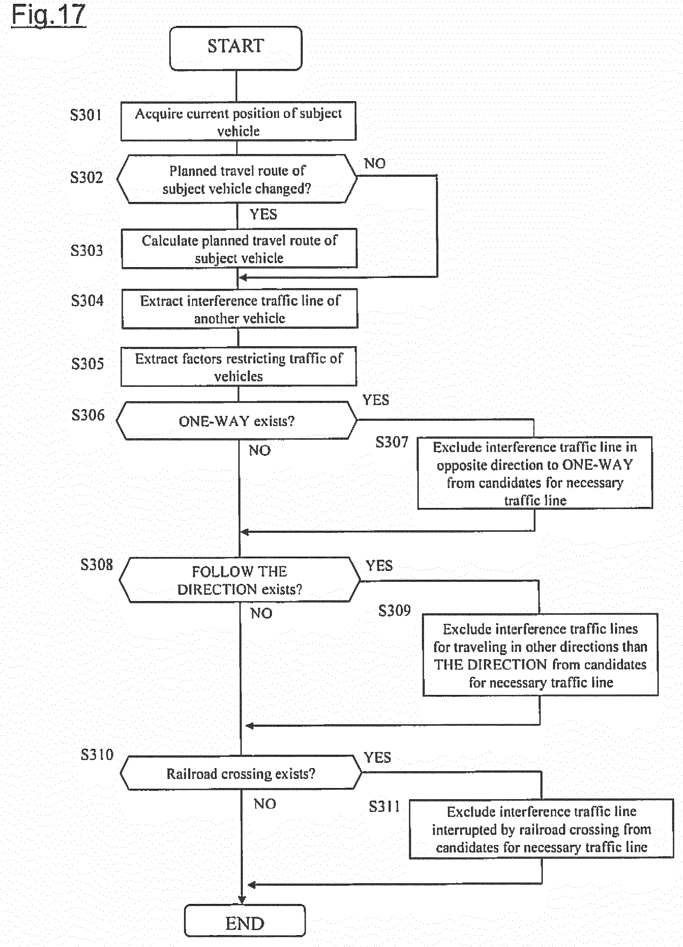

FIG. 17 is a flowchart for describing a process of selecting a necessary traffic line in accordance with the traffic rules on a road using the evaluation processor 11 (see FIG. 10 to FIG. 12). Steps S301 to S304 illustrated in this flowchart are the same as steps S101 to S104 illustrated in the flowchart of FIG. 15, so repetitive description will be omitted and the already-explained description will be borrowed herein.

Step S304 is followed by step S305 in which the evaluation processor 11 refers to the road information 223 and the traffic rule information 224 to extract traffic rules associated with the lane to which the planned travel route 1 of the subject vehicle V1 belongs and the lane to which the interference traffic line 2 of another vehicle 3 belongs, and extracts factors that restrict the traffic of vehicles from among the extracted traffic rules.

Then, in step S306, the evaluation processor 11 determines whether or not the road to which the interference traffic line 2 of another vehicle V3 belongs has a restriction of WRONG WAY for vehicles due to a traffic rule of ONE-WAY. An affirmative determination in this step is followed by step S307 while a negative determination is followed by step S308. In step S307, the evaluation processor 11 excludes the interference traffic line 2 in the opposite direction to the traveling direction in conformity with the traffic rule of ONE-WAY from candidates for the necessary traffic line.

Then, in step S308, the evaluation processor 11 determines whether or not the road to which the interference traffic line 2 of another vehicle V3 belongs has a restriction of WRONG WAY for vehicles due to a traffic rule of FOLLOW THE DIRECTION. An affirmative determination in this step is followed by step S309 while a negative determination is followed by step S310. In step S309, the evaluation processor 11 excludes the interference traffic line 2 of the other vehicle V3 from candidates for the necessary traffic line because the other vehicle V3 is prohibited from entering the road, to which the planned travel route 1 of the subject vehicle V1 belongs, due to the traffic rule of FOLLOW THE DIRECTION.

Then, in step S310, the evaluation processor 11 determines whether or not the road to which the interference traffic line 2 of another vehicle V3 belongs has a restriction of temporary prohibition of entry of vehicles due to a traffic rule of STOP at the crossing bar of a railroad crossing 7. An affirmative determination in this step is followed by step S311. When a negative determination is made, the process is ended. In step S311, the evaluation processor 11 excludes the interference traffic line 2 of the other vehicle V3 from candidates for the necessary traffic line because the other vehicle V3 is prohibited from entering the road, to which the planned travel route 1 of the subject vehicle V1 belongs, due to the traffic rule of STOP at the crossing bar of the railroad crossing 7.

As described above, in the driving assistance method and apparatus according to one or more embodiments of the present invention, interference traffic lines 2 of other vehicles V3 interfering with a planned travel route 1 of the subject vehicle V1 are extracted, an interference traffic line (necessary traffic line) 2 necessary for determining the driving action of the subject vehicle V1 is selected from among the extracted interference traffic lines 2 on the basis of at least one of a road shape, a traffic rule, and a traffic situation, and the driving action of the subject vehicle V1 to respond to another vehicle V3 moving along the selected interference traffic line 2 is determined. Through this operation, the range for search when determining the driving action of the subject vehicle V1 can be set as an appropriate range in accordance with the necessity for determining the driving action of the subject vehicle V1. It is therefore possible to suppress the occurrence of a range in which perception by the object detection device 230 is not possible in the range for search when determining the driving action and also to suppress the occurrence of a situation in which the determination of a driving action is difficult. Moreover, the load of a determination process for the driving action can be mitigated by limiting the range for search when determining the driving action of the subject vehicle V1 and it is therefore possible to reduce the time for the process and prevent the occurrence of a delay of the process.

In the driving assistance method and apparatus according to one or more embodiments of the present invention, the necessary traffic line is selected from among the extracted interference traffic lines 2 on the basis of a state of the traffic signals 3A to 3D corresponding to the extracted interference traffic lines 2 of other vehicles V3 (see FIG. 3, FIG. 4, and FIG. 15). For example, the interference traffic line 2 corresponding to the traffic signal in a passable state is selected as the necessary traffic line from among the extracted interference traffic lines 2. This can exclude the interference traffic lines 2 through which it is estimated that other vehicles V3 do not pass in relation to the state of the traffic signals 3A to 3C from candidates for the necessary traffic line.

In the driving assistance method and apparatus according to one or more embodiments of the present invention, when the state of the traffic signals corresponding to the extracted interference traffic lines 2 of other vehicles V3 changes, the interference traffic line to be selected is switched in accordance with the change of the state of the traffic signals. For example, when the state of the traffic signal corresponding to the selected interference traffic line 2 changes from the passable state to the impassable state, the selected interference traffic line 2 is switched to unselected one by gradually reducing the length. This allows a driving action to be planned which responds to a situation immediately after the state of a traffic signal changes, such as a situation in which another vehicle V3 travels along the interference traffic line 2 toward the planned travel route 1 of the subject vehicle V1 immediately after the traffic signal changes from the passable state to the impassable state.

In the driving assistance method and apparatus according to one or more embodiments of the present invention, when the state of the traffic signal corresponding to the selected interference traffic line 2 of another vehicle V3 changes from the passable state to the impassable state, the length of the selected interference traffic line 2 is gradually reduced at a decrease amount per unit time in accordance with the vehicle speed of the other vehicle V3 moving along the selected interference traffic line 2. Here, as the vehicle speed of the other vehicle V3 increases, the decrease amount per unit of the length of the interference traffic line 2 as the necessary traffic line is reduced thereby to allow for a determination of the driving action to respond to the other vehicle V3 traveling along the interference traffic line 2 at a high speed.

Here, until a certain period of time (e.g. several seconds) elapses from immediately after the traffic signal corresponding to the interference traffic line 2 selected as the necessary traffic line changes from the passable state to the impassable state, the probability remains that another vehicle V3 travels along the interference traffic line 2. On the other hand, the probability that another vehicle V3 travels along an interference traffic line 2 increases in a relatively short period of time immediately after the state of the traffic signal corresponding to the interference traffic line 2 changes from the impassable state to the passable state (see FIG. 5). In the driving assistance method and apparatus according to one or more embodiments of the present invention, therefore, when the state of the traffic signal corresponding to the selected interference traffic line 2 of another vehicle V3 changes from the passable state to the impassable state, the selected interference traffic line 2 is switched to unselected one after a predetermined delay time elapses from the time point of the change. On the other hand, when the state of the traffic signal corresponding to an unselected interference traffic line 2 changes from the impassable state to the passable state, the unselected interference traffic line 2 is switched to selected one immediately after the change without providing a delay time. This allows a driving action to be determined which responds to another vehicle V3 traveling along the interference traffic line 2 after the state of the traffic signal changes.

In the driving assistance method and apparatus according to one or more embodiments of the present invention, when a parallel traveling vehicle V2 traveling parallel to the subject vehicle V1 exists, an interference traffic line 2 interfering with the planned travel route 4 of the parallel traveling vehicle V2 exists, and the parallel traveling vehicle V2 has a higher priority level under the traffic rules than that of another vehicle V3 moving along the interference traffic line 2, the interference traffic line 2 is not selected (see FIG. 9). This can exclude the interference traffic lines 2 through which it is estimated that the other vehicle V3 does not pass in relation to the relationship with the priority level of the parallel traveling vehicle V2 under the traffic rules, from candidates for the necessary traffic line.

In the driving assistance method and apparatus according to one or more embodiments of the present invention, the interference traffic line 2 along which movement of another vehicle V3 is restricted under a traffic rule, such as a traffic restriction due to ONE-WAY, FOLLOW THE DIRECTION, or a railroad crossing, is not selected (see FIG. 10 to FIG. 12). This can exclude the interference traffic lines 2 through which it is estimated that the other vehicle V3 does not pass in relation to the traffic rule, from candidates for the necessary traffic line.

Embodiments heretofore explained are described to facilitate understanding of the present invention and are not described to limit the present invention. It is therefore intended that the elements disclosed in the above embodiments include all design changes and equivalents to fall within the technical scope of the present invention.

For example, in the above-described embodiments, the road shape has been exemplified with reference to a road having an intersection, T-junction, and/or railroad crossing, but the necessary traffic line may also be selected on the basis of the information regarding other road shapes, such as the number of lanes and a junction of three or more streets. In the above-described embodiments, the traffic rules have been exemplified with reference to the traffic restriction due to traffic signals, the traffic rule that vehicles traveling straight ahead or turning left on an intersection have higher priority levels than those of oncoming vehicles turning right, the traffic restriction due to ONE-WAY, the traffic restriction due to FOLLOW THE DIRECTION, and the traffic restriction due to a railroad crossing, but the necessary traffic line may also be selected on the basis of the information regarding other traffic rules, such as traffic restrictions due to STOP and a priority road. Furthermore, the traffic situation has been exemplified with reference to a situation in which a parallel traveling vehicle exists, but the necessary traffic line may also be selected on the basis of the information regarding other traffic situations such as a situation in which a number of oncoming vehicles exist (i.e. a situation in which, when the subject vehicle turns left, the interference traffic lines of vehicles traveling straight ahead from the right side can be excluded from candidates for the necessary traffic line).

The scheme of determining a driving action is not limited to the above-described scheme and other appropriate schemes can also be selected.

[Description of Reference Numerals]

| | |
|---|---|
| 1 | Planned travel route |
| 2 | Interference traffic line |
| 3A to 3D | Traffic signals |
| 4 | Planned travel route |
| 7 | Railroad crossing |
| 100 | Driving assistance apparatus |
| 21 | Drive planning processor |
| V1 | Subject vehicle |
| V2 | Parallel traveling vehicle |
| V3 | Another vehicle |

**Claims**

1.  A driving assistance method comprising:

    extracting an interference traffic line interfering with a planned travel route of a subject vehicle, the interference traffic line being a route along which another vehicle can move;
    selecting the interference traffic line necessary for determining a driving action of the subject vehicle from among the extracted interference traffic lines on a basis of at least one of a road shape, a traffic rule, and a traffic situation; and
    determining the driving action of the subject vehicle to respond to another vehicle moving along the selected interference traffic line.

2.  The driving assistance method according to claim 1, comprising
    selecting the interference traffic line necessary for determining the driving action of the subject vehicle from among the extracted interference traffic lines on a basis of a state of a traffic signal corresponding to the extracted interference traffic line.

3.  The driving assistance method according to claim 2, comprising
    selecting the interference traffic line corresponding to the traffic signal in a passable state as the interference traffic line necessary for determining the driving action of the subject vehicle from among the extracted interference traffic lines.

4.  The driving assistance method according to claim 2 or 3, comprising
    when the state of the traffic signal corresponding to the extracted interference traffic line changes, switching the interference traffic line to be selected in accordance with the change of the state of the traffic signals.

5.  The driving assistance method according to any one of claims 2 to 4, comprising
    when the state of the traffic signal corresponding to the selected interference traffic line changes from a passable state to an impassable state, switching the selected interference traffic line to unselected one by gradually reducing a length of the selected interference traffic line.

6.  The driving assistance method according to claim 5, comprising
    when the state of the traffic signal corresponding to the selected interference traffic line changes from the passable state to the impassable state, gradually reducing the length of the selected interference traffic line at a decrease amount per unit time in accordance with a vehicle speed of another vehicle moving along the selected interference traffic line.

7.  The driving assistance method according to any one of claims 4 to 6, comprising:

switching the selected interference traffic line to unselected one after a predetermined delay time elapses from a time point when the state of the traffic signal corresponding to the selected interference traffic line changes from a passable state to an impassable state; and

switching the interference traffic line unselected to selected one without providing the delay time immediately after when the state of the traffic signal corresponding to the interference traffic line unselected changes from the impassable state to the passable state.

8. The driving assistance method according to any one of claims 1 to 7, wherein when a parallel traveling vehicle traveling parallel to the subject vehicle exists, the interference traffic line interfering with a traffic line of the parallel traveling vehicle exists, and the parallel traveling vehicle has a higher priority level under a traffic rule than that of another vehicle moving along the interference traffic line, the interference traffic line is not selected.

9. The driving assistance method according to any one of claims 1 to 8, wherein the interference traffic line along which movement of another vehicle is restricted under a traffic rule is not selected.

10. The driving assistance method according to claim 9, wherein the traffic rule is a traffic restriction due to ONE-WAY, FOLLOW THE DIRECTION, or a railroad crossing.

11. A driving assistance apparatus comprising a processor configured to determine a driving action of a subject vehicle traveling along a planned travel route,
the processor being configured to:

extract an interference traffic line interfering with the planned travel route of the subject vehicle, the interference traffic line being a route along which another vehicle can move;

select the interference traffic line necessary for determining the driving action of the subject vehicle from among the extracted interference traffic lines on a basis of at least one of a road shape, a traffic rule, and a traffic situation; and

determine the driving action of the subject vehicle to respond to another vehicle moving along the selected interference traffic line.

Fig.1

**Driving assistance system (1000)**

Driving assistance apparatus (100)

Scene evaluation device (10)
Evaluation processor (11)

Drive planning device (20)
Drive planning processor (21)

Output device (30)
Output control processor (31)

Onboard apparatus (200)

Detection device (260)
Steering angle sensor (261)
Vehicle speed sensor (262)
Attitude sensor (263)

Navigation device (220)
Position detection device (221)
Map information (222)
Road information (223)
Traffic rule information (224)

Drive device (270)
Braking device (271)

Steering device (280)

Object detection device (230)
Camera (231)
Radar device (232)

Lane departure prevention device (240)
Camera (241)
Road information (242)

Output device (250)
Display (251)
Speaker (252)

Fig.2

Fig.3

Fig.4

Fig.5

Fig.6

Decrease amount per unit time [m/s]

Vehicle speed [m/s]

Fig.7

Fig.8

EP 3 407 328 A1

Fig.9

25

Fig.10

Fig.11

V1

1

2

V3

Follow the Direction

Fig.12

Fig.13

Fig.14

## Fig.15

```
                    ┌─────────────┐
                    │    START    │
                    └──────┬──────┘
                           │
    S101    ┌──────────────────────────────┐
            │ Acquire current position of  │
            │        subject vehicle       │
            └──────────────┬───────────────┘
                           │
    S102        ╱Planned travel route of╲   NO
            ◁──│ subject vehicle changed?│──────┐
                ╲───────────┬───────────╱       │
                           YES                  │
    S103    ┌──────────────────────────────┐   │
            │ Calculate planned travel route│   │
            │       of subject vehicle      │   │
            └──────────────┬───────────────┘   │
                           │◁──────────────────┘
    S104    ┌──────────────────────────────┐
            │ Extract interference traffic  │
            │    line of another vehicle    │
            └──────────────┬───────────────┘
                           │
    S105    ┌──────────────────────────────┐
            │ Acquire information on traffic │
            │            signals            │
            └──────────────┬───────────────┘
                           │
    S106       ╱Traffic signal present╲    NO
            ┌─│ along planned travel route│────────┐
            │  ╲ of subject vehicle?    ╱           │
            │       ╲────┬────╱                     │
            │           YES                         │
    S107    │ ┌──────────────────────────────┐      │
            │ │ Associate interference traffic│     S111 ┌──────────────────┐
            │ │ line of another vehicle with  │          │ Calculate delay  │
            │ │         traffic signal        │          │       time        │
            │ └──────────────┬───────────────┘          └────────┬─────────┘
            │                │                                    │◁─────────┐
    S108    │      ╱State of traffic╲        YES     S112  ╱ Delay time ╲   NO
            │   ┌─│ signal changed?  │──────────────────◁─│   elapsed?   │───┘
            │   │  ╲──────┬──────╱                         ╲─────┬─────╱
            │   │        NO                                     YES
    S109    │   │ ╱Traffic signal corresponding╲      S113  ╱Traffic signal╲
            ◁───┼│ to interference traffic line │◁─────────│ changed from  │  NO
     NO     │   │╲     is impassable?         ╱           │ passable state│────┐
            │   │  ╲────┬────╱                            │ to impassable │    │
            │   │      YES                                │    state?     │    │
    S110    │   ┌──────────────────────────────┐          ╲────┬────╱         │
            │   │ Exclude interference traffic  │        S114  YES      S115   │
            │   │ line from candidates for      │     ┌──────────────┐ ┌──────────────┐
            │   │    necessary traffic line     │     │  Gradually   │ │   Select     │
            │   └──────────────┬───────────────┘     │ reduce length│ │ interference │
            │                  │                      │ of necessary │ │ traffic line │
            │                  │                      │ traffic line │ │      as      │
            │                  │                      └──────┬───────┘ │  necessary   │
            │                  │                             │         │ traffic line │
            │                  │                             │         └──────┬───────┘
            └──────────────────┼─────────────────◁───────────┴────────────────┘
                               │
                        ┌──────┴──────┐
                        │     END     │
                        └─────────────┘
```

Fig.16

START

S201  Acquire current position of subject vehicle

S202  Planned travel route of subject vehicle changed? — NO

YES

S203  Calculate planned travel route of subject vehicle

S204  Extract interference traffic line of another vehicle

S205  Acquire information on surrounding vehicles

S206  Parallel traveling vehicle exists?

NO

YES

S207  Calculate planned travel route of parallel traveling vehicle

S208  Planned travel route of parallel traveling vehicle intersects with interference traffic line of another vehicle?

NO

YES

S209  Calculate priority levels of parallel traveling vehicle and another vehicle

S210  Priority level of parallel traveling vehicle is higher?

NO

YES

S211  Exclude interference traffic line from candidates for necessary traffic line

END

## Fig.17

START

S301 — Acquire current position of subject vehicle

S302 — Planned travel route of subject vehicle changed? — NO

YES

S303 — Calculate planned travel route of subject vehicle

S304 — Extract interference traffic line of another vehicle

S305 — Extract factors restricting traffic of vehicles

S306 — ONE-WAY exists? — YES

NO

S307 — Exclude interference traffic line in opposite direction to ONE-WAY from candidates for necessary traffic line

S308 — FOLLOW THE DIRECTION exists? — YES

NO

S309 — Exclude interference traffic lines for traveling in other directions than THE DIRECTION from candidates for necessary traffic line

S310 — Railroad crossing exists? — YES

NO

S311 — Exclude interference traffic line interrupted by railroad crossing from candidates for necessary traffic line

END

**EP 3 407 328 A1**

**INTERNATIONAL SEARCH REPORT**

| International application No. |
|---|
| PCT/JP2016/086624 |

A. CLASSIFICATION OF SUBJECT MATTER
*G08G1/16*(2006.01)i, *G01C21/26*(2006.01)i

According to International Patent Classification (IPC) or to both national classification and IPC

B. FIELDS SEARCHED

Minimum documentation searched (classification system followed by classification symbols)
G08G1/16, G01C21/26

Documentation searched other than minimum documentation to the extent that such documents are included in the fields searched
Jitsuyo Shinan Koho       1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2015-87893 A  (Mitsubishi Electric Corp.),<br>07 May 2015 (07.05.2015),<br>paragraphs [0064] to [0065], [0123] to [0135];<br>fig. 13<br>(Family: none) | 1-4,8-11<br>5-7 |
| Y | JP 2010-191604 A  (Toyota Motor Corp.),<br>02 September 2010 (02.09.2010),<br>paragraphs [0046], [0130]<br>(Family: none) | 1-4,8-11 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 February 2017 (22.02.17) | 07 March 2017 (07.03.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

34

## INTERNATIONAL SEARCH REPORT

International application No.

PCT/JP2016/086624

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2007-101580 A (Aisin AW Co., Ltd.),<br>19 April 2007 (19.04.2007),<br>paragraph [0058]; fig. 6<br>& US 2010/0121886 A1<br>paragraph [0059]; fig. 6<br>& WO 2007/037389 A1 & EP 1909247 A1<br>& KR 10-2008-0070620 A & CN 101253542 A | 10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011096105 A